# EUROPEAN PATENT APPLICATION

(11) **EP 2 573 547 A1**
(43) Date of publication of application: **27.03.2013**
(21) Application number: 11783288.1
(22) Date of filing: 19.05.2011
(51) Int. Cl.: G01N 21/59, G01F 23/28, G01N 21/90

(54) **DRUG SOLUTION DETERMINATION DEVICE AND DRUG SOLUTION DETERMINATION METHOD**

(30) Priority: 20.05.2010 JP 2010115994
(71) Applicant: Panasonic Corporation, Kadoma-shi Osaka 571-8501 (JP)
(72) Inventor: TOJO, Tsuyoshi, Osaka-shi, Osaka 540-6207 (JP); FUJIOKA, Soichiro, Osaka-shi, Osaka 540-6207 (JP); NAKAMURA, Tohru, Osaka-shi, Osaka 540-62007 (JP)
(74) Representative: Eisenführ, Speiser & Partner
(86) International application number: PCT/JP2011/002797
(87) International publication number: WO 2011/145351

(57) **Abstract**

A liquid medicine identification apparatus (10) includes a pattern projection unit (12), a placing unit (13) that places thereon a medicine container (16) filled with a liquid medicine (15), an imaging camera (14), and an image processing unit (11). Imaged image information imaged by the imaging camera after transmitting light and dark patterns of the pattern projection unit through the medicine container is compared with reference image information by the image processing unit, and a type of the liquid medicine or the medicine container is determined.

## Description

### TECHNICAL FIELD

The present invention relates to a liquid medicine identification apparatus and a liquid medicine identification method, which identify a liquid medicine such as an injection drug for use in a hospital and the like, and identify a medicine container that contains this liquid medicine therein.

### BACKGROUND ART

For example, in a hospital, it is frequent that plural types of liquid medicines are applied to one inpatient. At this time, confirmation of types of necessary liquid medicines or/and sizes of medicine containers, and the like rely on visual observations by a nurse or a pharmacist. Therefore, in the hospital, there sometimes occurs a mistake in assorting the medicine containers, a mistake in confirming the assorted medicine containers, a mistake in quantitatively grasping quantities of the liquid medicines, or the like. Moreover, among the liquid medicines to be applied in the hospital and the like, there are also liquid medicines to be handled in sufficient consideration of safety. Therefore, it is desired to develop a liquid medicine identification apparatus, in which there is no mistake such as mix-up of desired liquid medicines, and a workload is small.

As such a device, a device has been proposed, which, in a container that contains plural types of liquids, accurately and automatically detects positions of a liquid surface as an interface between the liquid and a gas and of an interface between liquid phases which are not mixed with each other in order to grasp liquid quantities of the respective liquids (for example, refer to Patent Literature 1).

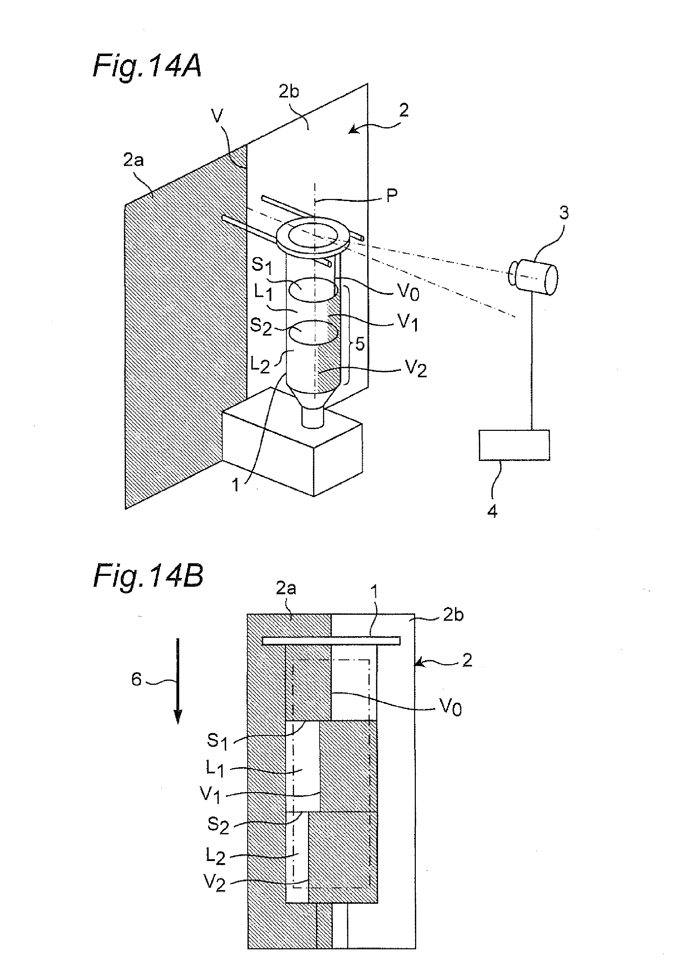

Figs. 14A and 14B show a conventional interface position detection device. Fig. 14A is a perspective view showing a schematic configuration of the interface position detection device. Fig. 14B is a view showing an example of an image imaged in order to detect such interface positions.

As shown in Fig. 14A, in a container 1, two types of liquids L₁ and L₂ are contained. In this container 1, the liquid L₁ is contained in an upper portion thereof, the liquid L₂ is contained in a lower portion thereof, and the liquid L₁ and the liquid L₂ are contained separately from each other. An interface S₁ is formed between the liquid L₁ and air. An interface S₂ is formed between the liquid L₁ and the liquid L₂. However, the liquids L₁ and L₂ are colorless transparent, the container 1 is also a colorless transparent container, and accordingly, it is difficult to determine the two interfaces S₁ and S₂.

In the interface position detection of Patent Literature 1, in order to make it easy to visually grasp positions of these two interfaces S₁ and S₂, a background plate 2 in which a left half portion 2a is painted black and a right half portion 2b is painted white is arranged behind the container 1. In front, an imaging device 3 connected to an image processing device 4 is arranged in order to image an image of the container 1 that contains the liquids L₁ and L₂. Note that a distance between the container 1 and the background plate 2 is selected to be longer than a focal distance of a columnar lens 5 formed of the container 1 and the liquids L₁ and L₂. Therefore, in an image obtained by imaging, by using the imaging device 3, a color-separated pattern of the background plate 2 from a front side through the columnar lens 5 (the container 1 and the liquids L₁ and L₂), black and white patterns thereof are inverted horizontally as shown in FIG. 14B.

First, in order to determine the two interfaces S₁ and S₂, in the image shown in FIG. 14B, a position of a vertical line V that indicates a boundary between the black and white patterns of the background plate 2 with respect to the container 1 is detected. That is to say, the image of FIG. 14B is scanned in the horizontal direction, and the vertical line V that indicates the boundary between the black and white patterns in the columnar lens 5 (the container 1) is detected. This is sequentially performed along an arrow 6, for example, from the upper portion of the container 1 to the lower portion thereof. Then, as shown in FIG. 14B, the vertical line V of the background plate 2 in a portion of the air becomes a vertical line V_{C}, the vertical line V of the background plate 2 in a portion of the liquid L₁ becomes a vertical line V₁, and the vertical line V of the background plate 2 in a portion of the liquid L₂ becomes a vertical line V₂. Hence, a positional relationship among positions of the vertical lines V₀, V₁, and V₂ becomes clear. Here, the reason why the positions of the vertical lines V_{C}, V₁, and V₂ are shifted from one another is that refractive indices of the gas and the liquid are different from one another. In such a way, horizontal positions where the vertical lines V_{C}, V₁, and V₂ become discontinuous with one another are individually detected as the two interfaces S₁ and S₂. Then, liquid quantities of the liquids L₁ and L₂ are calculated by positions of the two interfaces S₁ and S₂ with respect to the container 1. These operations can be performed by imaging the image of the container 1 by the imaging device 3 and analyzing this image by the image processing device 4. Hence, the positions of the interfaces are detected, whereby the liquid quantities of the liquids contained in the container 1 can be calculated.

### CITATION LIST

### PATENT LITERATURE

Patent Literature 1: Unexamined Japanese Patent Publication No. 2000-241229

### SUMMARY OF INVENTION

### TECHNICAL PROBLEM

In such a technology of Patent Literature 1, which is described above, only interface heights of the liquid medicines are grasped, and there has been a problem that, even if the types and quantities of the liquid medicines and a type of the liquid medicine container differ from targets, such mistakes cannot be detected.

The present invention solves this problem. It is an object of the present invention to provide a liquid medicine identification apparatus and a liquid medicine identification method, which are capable of accurately identifying that the types of liquid medicines and liquid medicine container are the same as the targets.

### SOLUTION TO PROBLEM

In order to achieve the foregoing object, the present invention is configured as follows.

According to one aspect of the present invention, there is provided a liquid medicine identification apparatus comprising:
a pattern projection unit that projects light and dark patterns;
a placing unit that places thereon a medicine container containing a liquid medicine in an inside thereof and having transparency;
an imaging camera that images, as imaged image information, the light and dark patterns having transmitted through the medicine container; and
an image processing unit that acquires, from a database, reference image information serving as a reference for identification, compares the reference image information and the imaged image information with each other, and identifies a type of the liquid medicine or the medicine container.

According to another aspect of the present invention, there is provided a liquid medicine identification method comprising:
placing, on a placing unit, a medicine container containing a liquid medicine as an identification target therein and having transparency;
acquiring, from a database, reference image information serving as a reference for identification;
projecting light and dark patterns from behind the medicine container placed on the placing unit, the light and dark patterns being decided based on the reference image information;
imaging the light and dark patterns as imaged image information by transmitting the light and dark patterns through the medicine container and observing the resultants and
comparing the reference image information and the imaged image information with each other, and identifying a type of the liquid medicine or the medicine container.

### ADVANTAGEOUS EFFECTS OF INVENTION

In accordance with the liquid medicine identification apparatus and liquid medicine identification method of the present invention, it can be accurately identified that the types of the liquid medicines and the liquid medicine container are the same as the targets.

### BRIEF DESCRIPTION OF DRAWINGS

These and other objects and features of the present invention will become clear from the following description taken in conjunction with the preferred embodiments thereof with reference to the accompanying drawings, in which:
Fig. 1A is a perspective view showing a liquid medicine identification apparatus according to a first embodiment of the present invention;
Fig. 1B is a block diagram showing an image processing unit of the liquid medicine identification apparatus according to the first embodiment of the present invention;
Fig. 2 is an operation flowchart of a liquid medicine identification method according to the first embodiment of the present invention;
Fig. 3A is a view showing an example of imaged image information imaged by an imaging camera in examples of image information for use in the liquid medicine identification apparatus according to the first embodiment of the present invention;
Fig. 3B is a view showing an example of reference image information stored in a database in the examples of the image information for use in the liquid medicine identification apparatus according to the first embodiment of the present invention;
Fig. 4 is an operation flowchart of a portion related to the image information in the liquid medicine identification method according to the first embodiment of the present invention;
Fig. 5A is a view showing an example of an imaged image of light and dark patterns viewed through a liquid medicine container on a placing base of the liquid medicine identification apparatus according to the first embodiment of the present invention;
Fig. 5B is a side view viewed from a direction of an arrow 42 of Fig. 5A;
Fig. 6A is a view showing respective pieces of imaged image information imaged in the liquid medicine identification apparatus according to the first embodiment of the present invention [Figs. 6A(1) and 6A(2) are views showing imaged image information in cases where repetition cycles of striped light and dark patterns differ from each other];
Fig. 6B is a view showing respective pieces of imaged image information imaged in the liquid medicine identification apparatus according to the first embodiment of the present invention [Figs. 6B(3) to 6B(5) are views showing imaged image information in cases where medicine containers are different in diameter from one another though contain the same medicine];
Fig. 7A is a view showing respective pieces of imaged image information imaged in the liquid medicine identification apparatus according to the first embodiment of the present invention [Figs. 7A(1) and 7A(2) are views showing imaged image information in cases where repetition cycles of striped light and dark patterns differ from each other];
Fig. 7B is a view showing respective pieces of imaged image information imaged in the liquid medicine identification apparatus according to the first embodiment of the present invention [Figs. 7B(3) to 7B(5) are views showing imaged image information in cases where liquid medicines different from one another are contained in the same medicine container];
Fig. 8 is a view showing imaged image information acquired in cases of colorizing the light and dark patterns: Fig. 8(1) is a view showing imaged image information in a case of using color display, which has similar colors to color of the liquid medicine, for the light and dark patterns; and Fig. 8(2) is a view showing imaged image information in a case of using color display, which has complementary colors to the color of the liquid medicine, for the light and dark patterns;
Fig. 9 is a flowchart showing an example of a time of using the color display of the striped patterns;
Fig. 10A is a front view of a schematic configuration of another liquid medicine identification apparatus according to the first embodiment of the present invention;
Fig. 10B is a side view of the schematic configuration of such another liquid medicine identification apparatus according to the first embodiment of the present invention when viewed from a direction of an arrow 20a of Fig. 10A;
Fig. 11A is a front view of a schematic configuration of a liquid medicine identification apparatus according to a second embodiment of the present invention;
Fig. 11B is a side of the schematic configuration of such another liquid medicine identification apparatus according to the second embodiment of the present invention when viewed from a direction of an arrow 40a of Fig. 11A;
Fig. 12 is a view showing an example of an imaged image information of a syringe in a state of sucking the liquid medicine and of a medicine container, the imaged image information being obtained by the liquid medicine identification apparatus according to the second embodiment of the present invention;
Fig. 13 is a flowchart showing an example of a time of projecting striped patterns onto the syringe integrated with the medicine container while interposing a needle therebetween and of detecting a liquid surface and the like of the liquid medicine in the syringe;
Fig. 14A is a perspective view showing a schematic configuration of a conventional interface position detection device; and
Fig. 14B is a view showing an image example for explaining a conventional interface position detection method.

### DESCRIPTION OF EMBODIMENTS

A description is made below of embodiments of the present invention while referring to the drawings. Note that the same reference numerals are assigned to the same constituent components, and a description thereof is sometimes omitted. Moreover, in order to facilitate the understanding, the respective constituent components are shown mainly and schematically.

### (First embodiment)

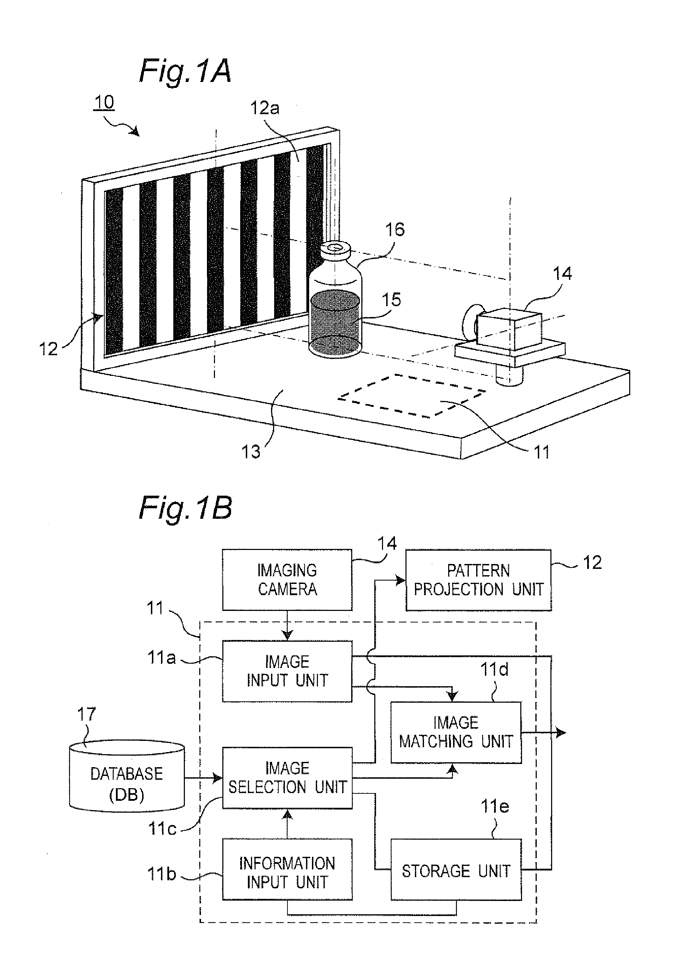

Fig. 1A is a perspective view showing a liquid medicine identification apparatus 10 according to a first embodiment of the present invention. Fig. 1B is a block diagram showing an image processing unit 11 of the liquid medicine identification apparatus 10.

As shown in Fig. 1A, the liquid medicine identification apparatus 10 includes: a pattern projection unit 12; a placing unit 13; an imaging camera 14; and an image processing unit 11.

Here, the pattern projection unit 12 projects light and dark patterns 12a. As the pattern projection unit 12, there will be usable a device that projects the predetermined light and dark patterns 12a, such as a projection device in which the predetermined light and dark patterns 12a are projected from a light source through a plate-like member toward a medicine container (for example, a vial) 16, and a liquid crystal display device that displays the predetermined light and dark patterns 12a. For example, the predetermined light and dark patterns 12a stand for patterns in which striped light patterns (for example, white striped patterns) with a fixed width and long striped dark patterns (for example, black striped patterns) with a fixed width are alternately arranged with elongated along a direction (for example, an up and down direction) intersecting the horizontal direction and with uniform brightness in the up and down directions. Though the widths of the patterns do not have to be the fixed widths, the fixed widths are preferable since a load on image processing or the like becomes small. A dimension of the widths of the patterns is set at such a dimension that at least three patterns are included in the medicine container 16 in imaged image information 19. This is because accurate determination is difficult if the patterns in the medicine container 16 in the imaged image information 19 are less than three. By verification by the inventors, it is found out that the patterns in the medicine container 16 in the imaged image information 19 are three to eight. If the patterns in the medicine container 16 in the imaged image information 19 are more than eight, then the number of image pixels per pattern is reduced, and image matching accuracy is affected thereby, and accordingly, this is not preferable. Hence, as the light and dark patterns 12a, preferably, appropriate ones are selected based on the medicine container 16 and a liquid medicine 15, which are identification targets. As a selection method of the appropriate light and dark patterns 12a, there is a method of previously storing relation information among the medicine container 16 and the liquid medicine 15 and the light and dark patterns 12a in a database 17 or the like, and of selecting the appropriate light and dark patterns 12a based on the relation information.

The placing unit 13 is a plate-like member arranged in front of the pattern projection unit 12, and has transparency. As an example of the placing unit 13, for example, there is a transparent plate-like member. On the placing unit 13 having the transparency, the medicine container 16 is placed. This medicine container 16 is a container that has the liquid medicine 15 in an inside thereof (that is, in an inside of which the liquid medicine 15 is stored).

Moreover, the imaging camera 14 is arranged so as to be opposed to the light and dark patterns 12a of the pattern projection unit 12 and in front of the placing unit 13. Then, this imaging camera 14 images the light and dark patterns 12a of the pattern projection unit 12, which have transmitted through the medicine container 16.

The image processing unit 11 is connected to the imaging camera 14, and performs liquid medicine identification by processing the imaged image information imaged by the imaging camera 14.

As shown in a block diagram of FIG. 1B, the image processing unit 11 includes: an image input unit 11a; an information input unit 11b; an image selection unit 11c; an image matching unit 11d; a storage unit 11e.

Here, the image input unit 11a is connected to the imaging camera 14, and the imaged image information imaged by the imaging camera 14 is inputted thereto. The imaged image information thus inputted is stored in the storage unit 11e.

The information input unit 11b receives medicine information that includes at least information regarding the types of the liquid medicine 15 and the medicine container 16. The information input unit 11b can contain not only an input by an operator but also an input from an in-hospital system (having electronic medical records and the like) located as host computer of this liquid medicine identification apparatus. In some case, reference image information and the like, which are included in the host-computer-side in-hospital system (having the electronic medical records and the like), are also inputted to the information input unit 11b. The inputted medicine information is stored in the storage unit 11e. Here, the medicine information is information inputted as the medicine and the medicine container, which should be identified, from the operator using the liquid medicine identification apparatus. As specific input means for inputting the information to the information input unit 11b, there are a keyboard, mouse, touch panel, and voice input device of a personal computer, an access program (access means or an access unit) that automatically accesses an external medicine information database, or the like.

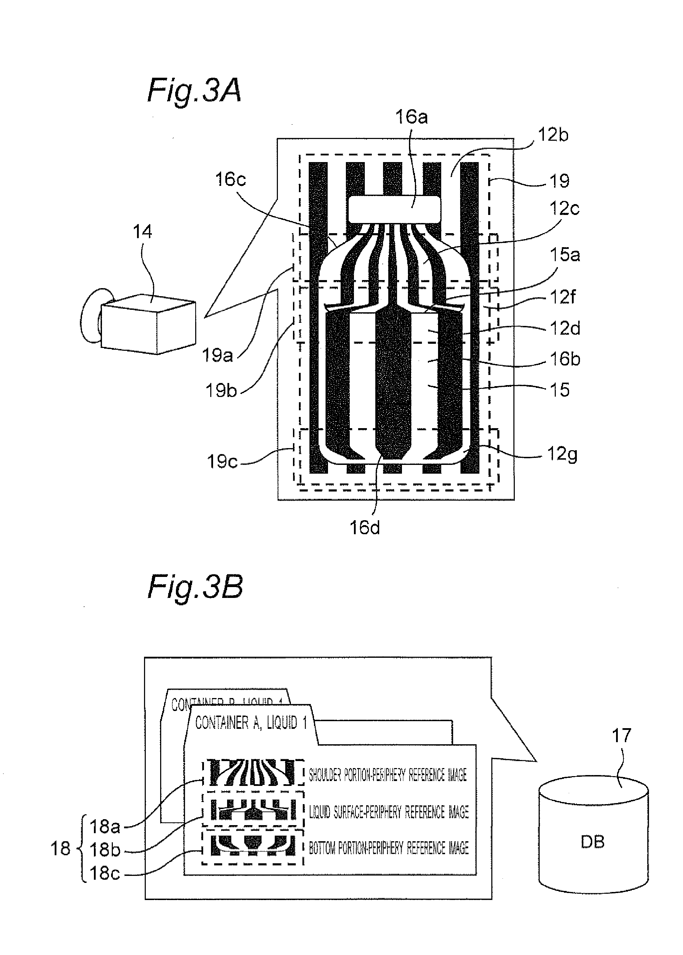

The database (DB) 17 is a database arranged in the liquid medicine identification apparatus 10, or a database that is arranged on an outside of the liquid medicine identification apparatus 10 and is connectable thereto through a communication line such as the Internet. In this database 17, there is stored information regarding the types of the liquid medicine 15 and the medicine container 16, the information being reference image information 18 serving as a reference for identifying the liquid medicine 15 or the medicine container 16. Specifically, the reference image information 18 is imaged image information (refer to Fig. 3B) obtained by imaging the light and dark patterns 12a, which have transmitted through a medicine container that serves as a reference and has the liquid medicine 15 to be identified stored therein, by the imaging camera 14.

The image selection unit 11c selects and acquires the reference image information 18, which serves as the reference for the identification and is inputted in advance, from the information input unit 11b or the database (DB) 17 based on the information on the liquid medicine to be identified, which comes from the operator using the liquid medicine identification apparatus. The acquired reference image information 18 is stored in the storage unit 11e.

The image matching unit 11d compares the reference image information 18 acquired by the image selection unit 11c and the imaged image information 19 inputted to the image input unit 11a, both of which are stored in the storage unit 11e, with each other.

Based on information mentioned above, the image matching unit 11d determines whether or not the reference image information 18 and the imaged image information 19 are the same image information. In such a way, the image matching unit 11d identifies the type or/and shape of the liquid medicine 15 or/and the medicine container 16.

Though described later in detail, the type of the liquid medicine 15 or/and the shape of the medicine container 16 is identified instantaneously and accurately by using this configuration.

Next, a description is made of basic operations of the liquid medicine identification apparatus 10 of this first embodiment, and of a liquid medicine identification method using the liquid medicine identification apparatus 10.

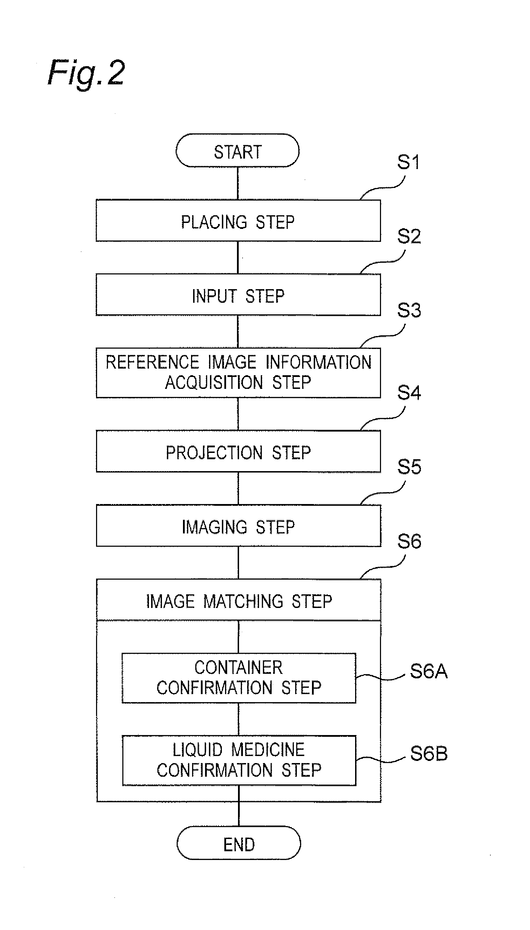

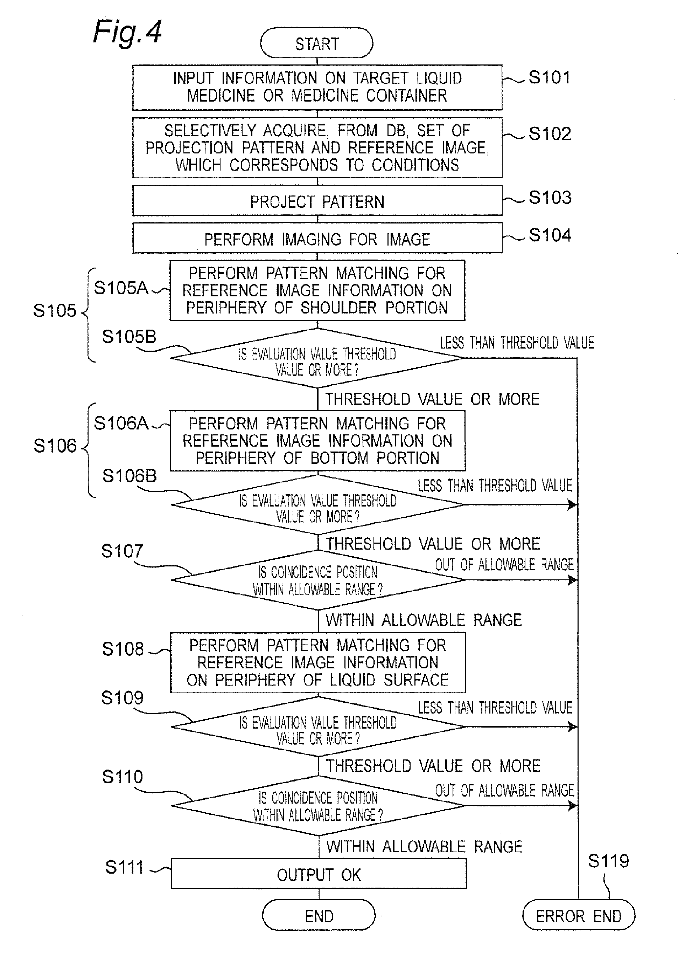

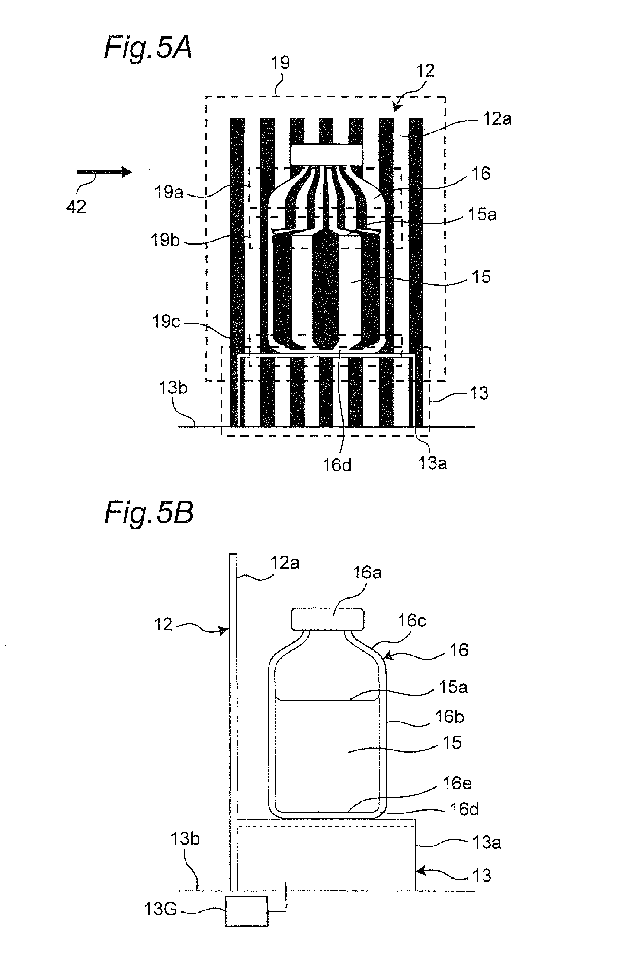

Fig. 2 shows an operation flowchart of the liquid medicine identification method using the liquid medicine identification apparatus 10 according to the first embodiment of the present invention. Figs. 3A and 3B are views showing examples of the image information for use in the liquid medicine identification apparatus 10 according to the first embodiment of the present invention. Fig. 3A is a view showing an example of the imaged image information imaged by the imaging camera 14. Fig. 3B is a view showing an example of the reference image information stored in the database 17. Fig. 4 shows an operation flowchart of a portion related to the image information in the liquid medicine identification method according to the first embodiment of the present invention. Fig. 5A is a view showing an example of the imaged image of the light and dark patterns 12a viewed through the liquid medicine container 16 on a placing base 13a. Fig. 5B is a view of a state of transmitting light through the medicine container 16 on the placing base 13a (a side view viewed from a direction of an arrow 42 of Fig. 5A).

As shown in Fig. 2, the liquid medicine identification method of this first embodiment is a method including: a placing step S1; an input step S2; a reference image information acquisition step S3; a projection step S4; an imaging step S5; and an image matching step S6.

Here, the placing step S1 is a step of placing the medicine container 16, in which the liquid medicine 15 as the identification target is stored, on the placing unit 13.

Subsequently, the input step S2 is a step of inputting the medicine information to the information input unit 11b and storing the medicine information in the storage unit 11e, the medicine information including at least the information regarding the type of the medicine container 16 placed on the placing unit 13 in the placing step S1 and regarding the type of the liquid medicine 15 in the medicine container 16. Here, the input to the information input unit 11b is an input by the operator from the input means, or an input from the host-computer-side in-hospital system (for example, having the electronic medical records and the like). Moreover, the medicine information is information inputted as the liquid medicine and the medicine container, which should be identified, from the operator using the liquid medicine identification apparatus.

Subsequently, the reference image information acquisition step S3 is a step of selecting and acquiring the reference image information, which serves as the reference for the identification, from the information input unit 11b or the database 17 by the image selection unit 11c based on the medicine information stored in the storage unit 11e.

Subsequently, the projection step S4 is a step of projecting, based on the reference image information acquired in the reference image information acquisition step S3, the light and dark patterns 12a, which correspond thereto, by the pattern projection unit 12 from a back surface of the medicine container 16 placed on the placing unit 13. This projection step S4 may be performed simultaneously with the input step S2 or the reference image information acquisition step S3. Here, in order to control timing of the imaging, information to the effect that the light and dark patterns 12a are projected by the pattern projection unit 12 in the projection step S4 is transmitted to the imaging camera 14.

Subsequently, the imaging step S5 is a step of observing the light and dark patterns 12a, which are projected by the pattern projection unit 12 in the projection step S4, through the medicine container 16 and the liquid medicine 15 stored therein, and imaging the light and dark patterns 12a as the imaged image information by the imaging camera 14. The timing of the imaging is set after the information to the effect that the light and dark patterns 12a are projected by the pattern projection unit 12 is transmitted and inputted to the imaging camera 14.

Subsequently, the image matching step S6 is a step of determining by the image matching unit 11d whether or not the reference image information acquired in the reference image information acquisition step S3 and the imaged image information acquired in the imaging step S5 are the same image information. Such determination as to whether or not both pieces of the information are the same image information is performed by the image matching unit 11d based on whether or not a degree of similarity between the reference image information and the imaged image information is a preset threshold value or more.

Then, in the image matching step S6, it is determined by the image matching unit 11d whether or not the reference image information and the imaged image information are the same image information, whereby the type or/and shape of the liquid medicine 15 or/and the medicine container 16 coincides with the target to be handled. Though described later in detail, the image matching step S6 includes a container confirmation step S6A and a liquid medicine confirmation step S6B.

Next, a description is specifically made of the basic operations of the liquid medicine identification apparatus 10.

First, as shown in Fig. 1A, the liquid medicine 15 and the medicine container 16 that contains the liquid medicine 15 therein, both of which serve as the identification target, are placed on the placing unit 13 of the liquid medicine identification apparatus 10. Specifically, this medicine container 16 is placed at a predetermined position between the pattern projection unit 12 that projects the light and dark patterns 12a and the imaging camera 14 that images the image through the medicine container 16 (placing step S1).

Fig. 4 is a flowchart regarding specific handling of the image information in a flow from the input step S2 to the image matching step S6.

First, the medicine information as the information regarding the type or/and shape of the liquid medicine 15 or/and the medicine container 16, both of which serve as the identification target, is inputted to the information input unit 11b of the image processing unit 11 (input step S2, Step S101). Here, as an example of the medicine information, there is a color, viscosity, refractive index, or liquid medicine quantity of the liquid medicine 15. Moreover, as another example of the medicine information, there is a size, color, material, refractive index, or the like of the medicine container 16. For example, such pieces of the medicine information are inputted to the information input unit 11b from a medicine information database accumulated in the personal computer (not shown) by communication means, and are then stored in the storage unit 11e. Alternatively, the medicine information inputted from the keyboard or the like of this personal computer is inputted to the information input unit 11b by similar communication means, and is stored in the storage unit 11e.

After the medicine information is inputted to the information input unit 11b and is stored in the storage unit 11e, a set of projection patterns and reference image information, which correspond to this medicine information, is acquired from the storage unit 11e and the database 17 (reference image information acquisition step S3, Step S102). As shown in Fig. 1B and Fig. 3B, in the reference image information acquisition step S3, the image selection unit 11c selects and acquires the reference image information 18, which serves as the reference for the identification, from the database 17 based on the medicine information coming from the storage unit 11e. Here, the reference image information 18 is image information obtained by imaging, by the imaging camera 14, light and dark patterns 12a which have transmitted through a reference medicine container in which the liquid medicine 15 to be identified is stored. In this first embodiment, a configuration is adopted, in which the reference image information 18 is stored in advance in the database 17. Note that such a configuration may also be adopted, in which the reference image information 18 is inputted by the information input unit 11b in place of storing the reference image information 18 in advance in the database 17.

By using the reference image information 18 as described above, the case of identifying the liquid medicines 15 among which the shapes, colors, materials, or the like of the medicine containers 16 are the same or similar can be coped with. Moreover, by using the reference image information 18 as described above, the case of identifying different types of the liquid medicines 15 contained in the same type of medicine containers 16 can also be coped with. As this reference image information 18, for example, preferably, plural combinations of the medicine container 16 and the liquid solution 15 are prepared, and other pieces of the reference image information 18, which are as many as possible, are owned in advance. In such a way, even in the case where it is difficult to identify the liquid solution 15 or/and the medicine container 16, the type or/and shape of the liquid medicine 15 or/and the medicine container 16 can be accurately identified.

Moreover, the reference image information 18 is information including: image information imaged by transmitting light only through the medicine container 16; and image information imaged by transmitting light through the medicine container 16 and the liquid medicine 15. The image information incident onto the imaging camera 14 by transmitting the light only through the medicine container 16 comes to have a color and a refraction image, which mainly depend on the material and shape of the medicine container 16. In the image information concerned, features of the medicine container 16 appear most. Moreover, the image information incident onto the imaging camera 14 by transmitting the light through the medicine container 16 and the liquid medicine 15 comes to have a color and a refraction image, which depend on property of the liquid medicine 15 in addition to the material and shape of the medicine container 16. In such a way, based on these pieces of image information, the types or/and shapes of the liquid medicines 15 or/and the medicine containers 16 are sequentially identified, whereby a calculation amount of identification processing can be reduced. That is to say, by using these pieces of image information, the types or/and shapes of the liquid medicines 15 or/and the medicine containers 16 can be identified accurately at high speed.

Here, in the operation flowchart of the liquid medicine identification method, which is shown in Fig. 2, the image matching step S6 includes the container confirmation step S6A and the liquid medicine confirmation step S6B. Here, the container confirmation step S6A is to confirm the medicine container 16 that contains a medicine such as the liquid medicine 15. Moreover, the liquid medicine confirmation step S6B is to confirm the liquid medicine 15 in the medicine container 16. It is extremely dangerous to erroneously identify the liquid medicine 15, and accordingly, it is particularly important to confirm the liquid medicine 15. In order to individually confirm the medicine container 16 and the liquid medicine 15, it is necessary to acquire the reference image information 18 and the imaged image information 19, for example, in the container confirmation step S6A and the liquid medicine confirmation step S6B, respectively.

Here, a description is made of a method of identifying a container shape (the shape of the medicine container 16) more in detail.

It is frequent that the shape of the medicine container 16 has a feature on a periphery of a shoulder portion 16c of the container. Here, as shown in Fig. 5B, the shoulder portion 16c of the medicine container 16 stands for a portion, which is located above a barrel portion 16b with a fixed diameter, and is extended from a lower surface of a cap 16a to the barrel portion 16b with the fixed diameter. As shown in Fig. 5B, the shoulder portion 16c is a portion inclined in a curved shape in the medicine container 16. The barrel portion 16b is a portion in which the diameter is fixed in the medicine container 16. In general, the liquid medicine 15 is housed in this barrel portion 16b in order to facilitate visual observations by a pharmacist or the like. A bottom portion 16d of the medicine container 16 is a portion, which is located below the barrel portion 16b with the fixed diameter, and is extended to a flat bottom surface 16e. As shown in Fig. 5B, such a waist portion 16d is a portion in which a side surface of the medicine container 16 is curved in the medicine container 16. By investigating the periphery of this shoulder portion 16c of the medicine container 16, it becomes possible to identify the container shape more accurately. Therefore, in the container confirmation steep S6A, a region including the shoulder portion 16c of the medicine container 16 is imaged as imaged image information (shoulder portion-periphery imaged image information) 19a by the imaging camera 14 or the like.

Next, the shoulder portion 16c of the medicine container 16 in the imaged image information 19a is identified by being compared by the image matching unit 11d with a shoulder portion 16c of a medicine container 16 in reference image information (shoulder portion-periphery reference image information) 18a imaged in advance and stored in the database 17. When the type of the medicine container 16 is specified by the image matching unit 11d as a result of this identification, then the operations proceed to the liquid medicine confirmation step S6B. Note that, in this embodiment, the type of the medicine container 16 is identified more accurately by the shoulder portion 16c of the medicine container 16. However, in the case where there is no particular problem even if identification accuracy is somewhat lowered as a result of attempting speed enhancement of the processing speed, it is possible to identify, by the image matching unit 11d, the type of the medicine container 16 not only from the shoulder portion 16c but also from an entire outline or the like of the medicine container 16.

In the liquid medicine confirmation step S6B, a region individually including: a liquid surface 15a of the liquid medicine 15 in the medicine container 16; and the barrel portion 16b and bottom portion 16d of the medicine container 16 is imaged as imaged image information (liquid surface-periphery imaged image information) 19b by the imaging camera 14. Moreover, a region including the bottom portion 16d of the medicine container 16 is imaged as imaged image information (bottom portion-periphery imaged image information) 19c by the imaging camera 14. These imaged image information (liquid surface-periphery imaged image information) 19b and imaged image information (bottom portion-periphery imaged image information) 19c are individually identified by being compared by the image matching unit 11d with reference image information (liquid surface-periphery reference image information) 18b and reference image information (bottom portion-periphery image information) 18c, respectively, the reference image information 18b and 18c being imaged in advance and stored in the database 17. When the type of the liquid medicine 15 is specified by the image matching unit 11d as results of these identifications, the liquid medicine confirmation step S6B is ended.

Moreover, the reference image information 18 and the imaged image information 19 as shown in Fig. 3A are image information including upper and lower portions of the liquid surface 15a of the liquid medicine 15.

By using this image information, with regard to the medicine container 16, it becomes possible to identify in detail a periphery of an interface portion, where the feature is likely to appear, by differences among the medicine containers 16 in the shape, the material, the color, or the like. Moreover, by using this image information, with regard to the liquid medicine 15, it becomes possible to identify in detail a periphery of an interface portion, where the feature is likely to appear, by differences among types, refractive indices, colors, or the like of the liquid medicines 15 contained in the medicine containers 16. Hence, it becomes possible to more accurately identify the type or/and shape of the liquid medicine 15 or/and the medicine container 16, or the like.

Subsequently, based on the reference image information 18, the light and dark patterns 12a, which correspond to the imaged image information 19, are projected from the back surface of the medicine container 16 by the pattern projection unit 12 (projection step S4, Step S103).

Here, as an example of the pattern projection unit 12, a liquid crystal display panel that displays the light and dark patterns 12a is used. In the imaging step S5, the image of the light and dark patterns 12a projected through the liquid medicine 15 and the medicine container 16 is imaged as the imaged image information 19 by using the imaging camera 14 (imaging step S5, Step S104). Fig. 3A shows an example of the imaged image. It is understood that respective patterns, which are: light and dark patterns 12b on an outside of the medicine container 16; light and dark patterns 12c of a gas portion in an inside of the medicine container 16; and light and dark patterns 12d of a portion of the liquid medicine 15 therein, look different from one another. Moreover, it is understood that light and dark patterns 12f including the upper and lower portions of the liquid surface 15a and light and dark patterns 12g including upper and lower portions of the bottom portion 16d (bottom surface 16e) are characteristically changed in an up and down direction and right and left direction of the imaged image.

As described above, with regard to the medicine container 16, the identification for a variety of combinations of the shape, material, color, or the like of the medicine container 16 can be carried out. Moreover, with regard to the liquid medicine 15, the identification for a variety of combinations of the type, refractive index, color, and the like of the liquid medicine 15 contained in this medicine container 16 can be carried out. For the purpose of more accurate identification, it is important to identify the medicine container 16 and the liquid medicine 15 contained in the medicine container 16 independently of each other.

Subsequently, in the case of starting the image matching step S6, as shown in Fig. 3A and Fig. 3B, image information pattern matching for the reference image information (shoulder portion-periphery reference image information) 18a on the periphery of the shoulder portion 16c of the container 16 and the imaged image information (shoulder portion-periphery imaged image information) 19a thereon is performed by the image matching unit 11d (image matching step S6, Step S105). In the case where it is determined by the imaging matching unit 11d that a valuation value for the periphery of the shoulder portion is a threshold value for the periphery of the shoulder portion or more, the operations proceed to the next Step S106. In the case where it is determined by the imaging matching unit 11d that the valuation value for the periphery of the shoulder portion does not exceed the threshold value for the periphery of the shoulder portion, the operations proceed to a step (Step S119) of error end. Note that the threshold value for the periphery of the shoulder portion is a minimum evaluation value for the periphery of the shoulder portion, which is allowable in the identifications of the liquid medicine 15 and the medicine container 16.

Subsequently, a degree of coincidence of the image information, which is obtained by the pattern matching, is quantified as an evaluation value for the periphery of the bottom portion by the image matching unit 11d (image matching step S6, Step S106). In the case where it is determined by the image matching unit 11d that the evaluation value for the periphery of the bottom portion is a threshold value for the periphery of the bottom portion or more, the operations proceed to Step S107. In the case where it is determined by the image matching unit 11d that the evaluation value for the periphery of the bottom portion does not exceed the threshold value for the periphery of the bottom portion, the operations proceed to the step (Step S119) of the error end. Note that the threshold value for the periphery of the bottom portion is a minimum evaluation value for the periphery of the bottom portion, which is allowable in the identifications of the liquid medicine 15 and the medicine container 16.

A description is more specifically made of Step S105 and Step S106.

As mentioned above, first, by the image matching unit 11d, the pattern matching and the comparison are performed between the reference image information 18a and the imaged mage information 19a on the region including the shoulder portion 16c of the medicine container 16, where the feature of the container shape of the medicine container 16 is likely to appear, and then the pattern matching is identified (image matching step S6, Step S105A).

Thereafter, for the purpose of identification of pattern matching in Step S105B by the image matching unit 11d, the evaluation value for the periphery of the shoulder portion is quantified by the image matching unit 11d. In the case where the evaluation value for the periphery of the shoulder portion is the threshold value for the periphery of the shoulder portion or more, it is determined by the image matching unit 11d that the pattern matching is made (image matching step S6, Step S105B), and the operations proceed to the next step S106A. In the case where it is determined by the image matching unit 11d that the evaluation value for the periphery of the shoulder portion does not exceed the threshold value for the periphery of the shoulder portion, the operations proceed to the step (Step S119) of the error end.

Subsequently, the pattern matching is performed between the imaged image information (bottom portion-periphery imaged image information) 19c on the region including the bottom portion 16d and the reference image information (bottom portion-periphery reference image information) 18c, both thereof are compared with each other by the image matching unit 11d, and the pattern matching is identified by the image matching unit 11d (image matching step S6, Step S106A).

Thereafter, for the purpose of identification of pattern matching in Step S106B by the image matching unit 11d, the evaluation value for the periphery of the bottom portion is quantified by the image matching unit 11d. In the case where the evaluation value for the periphery of the bottom portion is the threshold value for the periphery of the bottom portion or more, it is determined by the image matching unit 11d that the pattern matching is made (image matching step S6, Step S106B), and the operations proceed to the next step S107. In the case where it is determined by the image matching unit 11d that the evaluation value for the periphery of the bottom portion does not exceed the threshold value for the periphery of the bottom portion, the operations proceed to the step (Step S119) of the error end.

Next, in Step S107, it is determined by the image matching unit 11d, for example, at which position the imaged image information (bottom portion-periphery imaged image information) 19c coincides with the reference image information (bottom portion-periphery reference image information) 18c, the position concerned being a position thereof in the up and down direction. More specifically, it is determined by the image matching unit 11d whether or not the position of the imaged image information 19c in the up and down direction is within a predetermined allowable range of the position of the reference image information 18c in the up and down direction (image matching step S6, Step S107). Here, such a position where the imaged image information 19c and the reference image information 18c coincide with each other is clarified by the image matching unit 11d. For example, this can be used for such a case of determining a position of the bottom portion 16d (bottom surface 16e) of the medicine container 16. In the case where it is determined by the image matching unit 11d that it is necessary to determine such a coincidence position in detail (in other words, that the position of the imaged image information 19c in the up and down direction is within the predetermined allowable range of the position of the reference image information 18c in the up and down direction), the operations proceed to the next Step S108. In the case where it is determined by the image matching unit 11d that it is unnecessary to determine such a coincidence position in detail (in other words, that the position of the imaged image information 19c in the up and down direction is out of the predetermined allowable range of the position of the reference image information 18c in the up and down direction), the operations proceed to the step (Step S119) of the error end.

Subsequently, in a similar way to Step S105, image information pattern matching between reference image information (liquid surface-periphery image information) 18b on a periphery of the liquid surface 15a and imaged image information (liquid surface-periphery imaged image information) 19b thereon is performed by the image matching unit 11d (image matching step S6, Step S108).

A degree of coincidence of the image information, which is obtained by the pattern matching, is quantified as an evaluation value for the periphery of the liquid surface (image matching step S6, Step S109). In the case where it is determined by the image matching unit 11d that this evaluation value for the periphery of the liquid surface is a threshold value for the periphery of the liquid surface or more, the operations proceed to the next Step S110. In the case where it is determined by the image matching unit 11d that the evaluation value for the periphery of the liquid surface does not exceed the threshold value for the periphery of the liquid surface, the operations proceed to the step (Step S119) of the error end. Note that the threshold value for the periphery of the liquid surface is a minimum evaluation value for the periphery of the liquid surface, which is allowable in the identifications of the liquid medicine 15 and the medicine container 16.

Next, in Step S110, it is determined by the image matching unit 11d, for example, at which position the imaged image information (liquid surface-periphery imaged image information) 19b coincides with the reference image information (liquid surface-periphery reference image information) 18b, the position concerned being a position thereof in the up and down direction. More specifically, it is determined by the image matching unit 11d whether or not the position of the imaged image information 19b in the up and down direction is within a predetermined allowable range of the position of the reference image information 18b in the up and down direction (image matching step S6, Step S110). Here, such a position where the position of the imaged image information 19b in the up and down direction and the position of the reference image information 18b in the up and down direction coincide with each other is clarified by the image matching unit 11d. For example, this can be used for such a case of determining a position of the liquid surface 15a in order to measure the liquid medicine quantity in the medicine container 16. In the case where it is necessary to determine such a coincidence position in detail (in other words, the position of the imaged image information 19b in the up and down direction is within the predetermined allowable range of the position of the reference image information 18b in the up and down direction), the operations proceed to the next Step S111. In the case where it is unnecessary to determine such a coincidence position in detail (in other words, the position of the imaged image information 19b in the up and down direction is out of the predetermined allowable range of the position of the reference image information 18b in the up and down direction), the operations proceed to the step (Step S119) of the error end.

Subsequently, in Step S111, after the position of the liquid surface 15a is clarified in Step S110, and for example, the liquid medicine quantity and the like are calculated, a notice that a series of the image matching step S6 is ended is issued. Specifically, "OK" that stands for that a series of the image matching step S6 is ended is outputted (Step S111), and the operations are ended.

Here, for the description, Fig. 5A and Fig. 5B as a side view of Fig. 5A when viewed from a direction of an arrow 42 of Fig. 5A are referred to. As shown in Fig. 5A and Fig. 5B, one portion (a portion that shades the imaged image of the light and dark patterns 12a on the back side when viewed from the imaging camera 14) of the placing unit 13 adjacent to the medicine container 16 is configured by a transparent member. Note that the shape of the member of the placing unit 13 adjacent to the medicine container 16 may be configured so that an area that shades the imaged image of the light and dark patterns 12a on the back side can become small, and a configuration may be adopted, in which the reference image information 18 and the imaged image information 19 are image information including the bottom portion 16d of the medicine container 16 and the upper and lower portions of the bottom portion 16d.

Note that, in Fig. 5A and Fig. 5B, in the placing unit 13, the placing base 13a on which the medicine container 16 is to be placed is arranged. For this placing base 13a, one in which a thickness in the upper and lower direction is thin is used in Fig. 5A and Fig. 5B; however, a transparent member having a predetermined thickness may be used. Moreover, a gap is provided between the placing base 13a and a flat surface (surface on which the placing base 13a is to be placed) 13b, whereby the light and dark patterns 12a on the back side may be left to be seen as they are. That is to say, a member in which an inside is hollow may be used as the placing base 13a.

With this configuration, when the light and dark patterns 12a uniform in the up and down direction are viewed through the medicine container 16, the image information coming from the bottom portion 16d, in which the light and dark patterns 12a are largely changed, and from the portion adjacent thereto can be observed. Hence, by the image information in which the light and dark patterns 12a are changed, the type or/and shape of the liquid medicine 15 or/and the medicine container 16 can be identified more accurately.

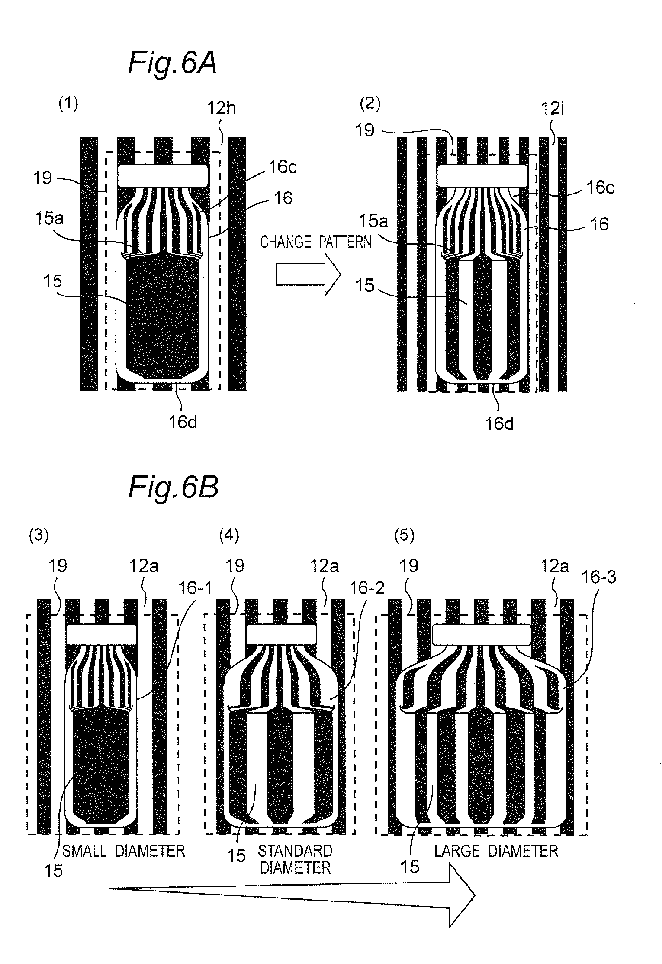

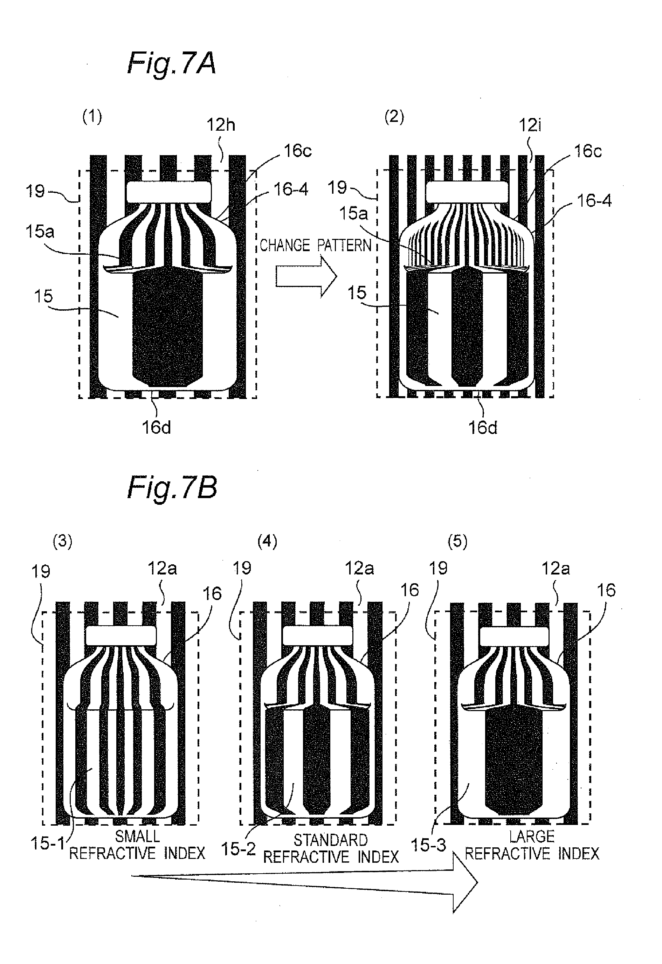

Figs. 6A(1) and 6A(2), Figs. 6B(3) to 6B(5), Figs. 7A(1) and 7A(2), and Figs. 7B(3) to 7B(5) are views showing the respective pieces of imaged image information 19 imaged in the liquid medicine identification apparatus 10 according to the first embodiment of the present invention.

Fig. 6A(1) shows imaged image information 19 in the case where a medicine container 16 with a diameter a little smaller than the standard one is placed on the placing unit 13, and from a back side thereof, light and dark patterns 12h are projected, in which a width of stripes in the horizontal direction is a little thicker than that of the standard light and dark patterns 12a. Here, a standard diameter of the medicine container 16 is a diameter of the medicine container at the time when the medicine container is stored as a reference image. The medicine container differs depending on a manufacturer thereof and a name and quantity of the medicine, and accordingly, use of this standard diameter of the medicine container 16 is effective for identifying the medicine container. In Fig. 6A(1), it is understood that light and dark patterns of the liquid medicine 15 in the medicine container 16, light and dark patterns in a space above the liquid medicine 15, and projected light and dark patterns look characteristically different from one another. However, in the liquid medicine 15, there is only a black pattern, and the light and dark patterns are not seen. In such a case, in the pattern projection unit 12, the light and dark patterns are changed to light and dark patterns 12i in which a width of stripes is narrower than that of the light and dark patterns 12h. Specifically, as shown in Fig. 6A(2), the width of the stripes is narrowed so that the light and dark patterns in the liquid medicine 15, the light and dark patterns in the space above the liquid medicine 15, and the projected light and dark patterns 12i can be distinguished from one another, and the imaged image information 19 is imaged by the imaging camera 14 and is acquired by the image input unit 11a one more time. That is to say, in the liquid medicine 15 of Fig. 6A(1), in the case where only the stripe of the dark portion is seen among the light and dark patterns, a repetition cycle of the striped light and dark patterns is changed (such a stripe width of the striped light and dark patterns is changed), and a pattern change is performed so that a plurality (preferably, three or more) of the stripes of the light portions or the dark portions among the light and dark patterns can be seen in the liquid medicine 15. In Fig. 6A(2), the pattern is changed from the light and dark patterns 12h to the light and dark patterns 12i, for example, so that three stripes of the dark portion and two stripes of the light portions can be seen. With regard to the pattern change, in the liquid crystal display device, there may be conceived: a method of preparing plural types of patterns in advance, and selecting and using a pattern from thereamong in response to the medicine container 16; a method of adjusting the width of the pattern stripes and projecting the patterns; or the like. In the case of the projection, it is conceived to prepare plural types of patterns in advance, and selecting and using a pattern from thereamong in response to the medicine container 16.

Figs. 6B(3) to 6B(5) are views showing respective pieces of imaged image information 19 acquired by projecting and imaging the same light and dark patterns 12a from back surfaces of liquid medicine containers 16-1, 16-2, and 16-3 different in diameter from one another. The same liquid medicine 15 is contained in the respective medicine containers 16 of Fig. 6B(3) to Fig. 6B(5). By Figs. 6B(3) to 6B(5), it is understood that the way how the striped light and dark patterns look is going to be different as diameters of the medicine containers 16-1, 16-2, and 16-3 are becoming larger from a small diameter to a standard diameter, and from the standard diameter to a large diameter.

Moreover, each of the light and dark patterns 12a, 12h, and 12i are striped patterns with two colors (for example, white color and black color). By using two colors for the patterns, it becomes easy to determine a state of the change of the patterns, and a feature of continuity appears more strongly in refracted images of the striped patterns, which depend on the shape of the medicine container 16. In such a way, it can be accurately determined that the type or/and size (shape) of the liquid medicine 15 or/and the medicine container 16 is correct.

Furthermore, positions in the stripe direction, where the light and dark patterns in the imaged image information 19 are largely changed in a diameter direction of the container, are determined, whereby the position of the liquid surface 15a or/and the bottom portion 16d (bottom surface 16e) can be clarified.

Figs. 7A(1) and 7A(2) are views illustrating a medicine container 16-4 with a diameter (width) a little larger than the standard in a situation where light and dark patterns 12a, 12h, and 12i similar to those in Figs. 6A(1) and 6A(2) are used. As shown in Fig. 7A(1), there is a case where a refractive index of the liquid medicine 15 in the medicine container 16-4 is large, so that the striped pattern does not appear in the light and dark patterns in the liquid medicine 15. In this case, as shown in Fig. 7A(2), the light and dark patterns 12h at the time of imaging the reference image are changed to the light and dark patterns 12i, and the width of the stripes of the projected light and dark patterns is thinned. In such a way, in the reference image, adjustment thereof is performed so that the striped light and dark patterns can be generated in the liquid medicine 15, thereafter, light and dark patterns with the same stripe shape are generated also at the time of the identification, and the imaged image information 19 is imaged again by the imaging camera 14 and is acquired by the image input unit 11a.

Figs. 7B(3) to 7B(5) are views showing respective pieces of imaged image information 19 acquired by projecting and imaging the same pattern 12a from the back surfaces of the medicine containers 16 in which liquid medicines 15-1, 15-2, and 15-3 different in refractive index from one another are contained. Note that the medicine containers 16 in Figs. 7B(3) to 7B(5) have the same diameter. By Figs. 7B(3) to 7B(5), it is understood that the way how the striped light and dark patterns look is going to be different as the refractive index of the liquid medicine 15 is becoming larger from "small" to "standard" and from "standard" to "large".

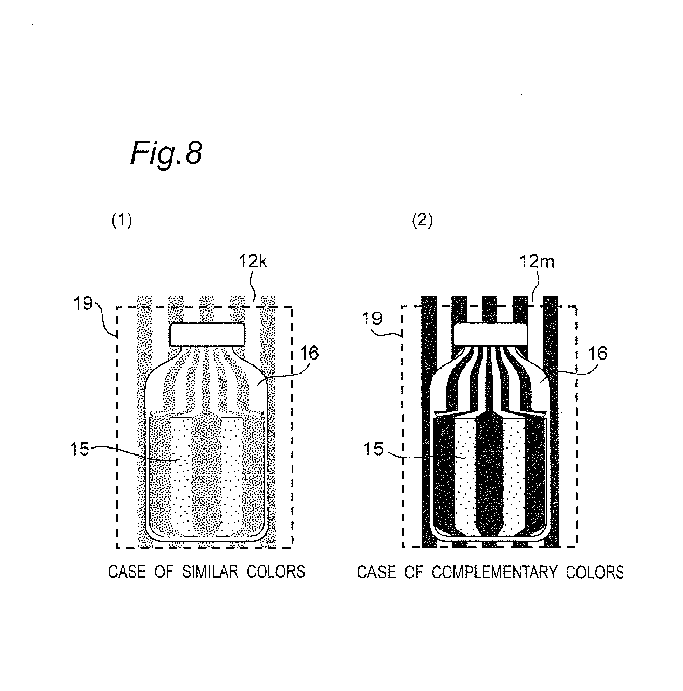

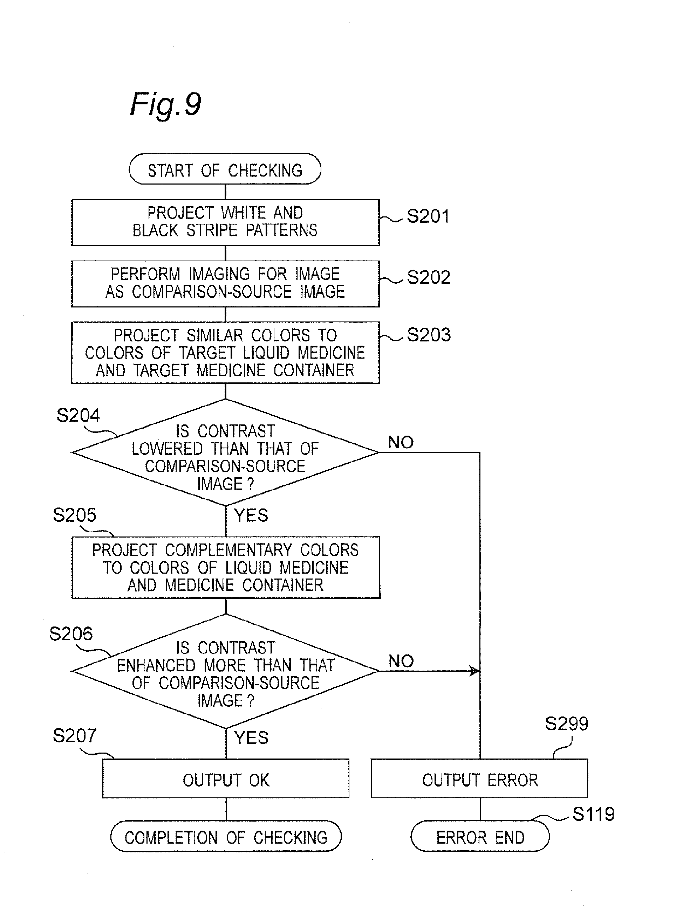

Meanwhile, Fig. 8 is a view showing imaged image information 19 acquired by the image input unit 11a in the case of using light and dark patterns 12k and 12m obtained by colorizing the light and dark patterns 12a. Fig. 8(1) is a view showing imaged image information 19 in the case of using color display, which has similar colors, for the light and dark patterns 12k. Fig. 8(2) is a view showing imaged image information 19 in a case of using color display, which has complementary colors, for the light and dark patterns 12m. Fig. 9 is a flowchart at the time of using the color display of the striped patterns.

Here, the similar colors are colors in which directions represented by the color circle are settled within a fixed range. For example, colors within a range where the directions represented by the color circle are settled within a range of ±30 deg., and the like are the similar colors. Moreover, the complementary colors are colors in which the directions represented by the color circle are settled within fixed ranges having positions opposite to each other by 180 deg. as centers thereof. For example, colors in which the directions represented by the color circle are settled within a range of 180 deg. ±30 deg., and the like are the complementary colors.

A description is made of a flow at the time of using the color display of the striped patterns.

First, by the pattern projection unit 12, the light and dark patterns 12a to be projected from the back surface of the medicine container 16 that contains the liquid medicine 15 are set at white and black stripe patterns (Step S201).

Subsequently, the imaged image information imaged by the imaging camera 14 by using the light and dark patterns 12a is acquired as comparison-source image information (Step S202).

Next, the striped light and dark patterns 12k having the similar colors to colors of the liquid medicine 15 as the identification target and the medicine container 16 as the identification target are projected, and the imaged image information 19 is acquired by the image input unit 11a (Step S203). Though described in detail, by using the striped light and dark patterns 12k having the similar colors, it becomes easy to determine a state of the change of the patterns by a color combination suitable for the type or/and material of the liquid medicine 15 or/and the medicine container 16. Hence, it becomes possible to more accurately identify the type or/and shape of the liquid medicine 15 or/and the medicine container 16.

Next, it is determined by the image matching unit 11d whether or not a contrast of the imaged image is lowered than that of a comparison-source image (Step S204). At this time, in the case where it is determined by the image matching unit 11d that the contrast of the imaged image is not lowered than that of such a reference image, the operations proceed to a step (Step S299) of error output, and are ended as an error (Step S119). Moreover, in the case where it is determined by the image matching unit 11d that the contrast of the imaged image is lowered than that of the comparison-source image, the operations proceed to Step S205.

In Step S205, the striped light and dark patterns 12m, which are colorized and have a complementary color relationship with the liquid medicine 15 as the identification target and the medicine container 16 as the identification target, are projected from the pattern projection unit 12 based on the information on the liquid medicine 15 as the identification target and the medicine container 16 as the identification target (Step S205).

Next, it is determined by the image matching unit 11d whether or not the contrast of the imaged image is lowered than that of the comparison-source image (Step S206). In such a way, in the case where it is determined by the image matching unit 11d that the contrast is not enhanced more than that of the comparison-source image, the operations proceed to the step (Step S299) of the error output, and are ended as the error (Step S119).

In the case where it is determined by the image matching unit 11d that the contrast of the imaged image is enhanced more than that of the comparison-source image, "OK output" that stands for the fact that the contrast of the imaged image is enhanced more than that of the comparison-source image (Step S207), the imaged image information 19 with a high contrast is acquired, and then the steps are ended.

Here, a configuration is adopted, in which colors of the two-color striped patterns projected in Step S203 and Step S205 are in a relationship of complementary colors to each other. With this configuration, the state of the change of the patterns becomes clear, and even a small change can be determined. That is to say, the colors of the two-color striped patterns are set in the relationship of the complementary colors to each other, and accordingly, the type or/and shape of the liquid medicine 15 or/and the medicine container 16 can be identified more accurately. Specifically, the change of the light and dark patterns in the vicinity of the liquid surface 15a or/and in the vicinity of the bottom portion 16d can be identified more clearly.

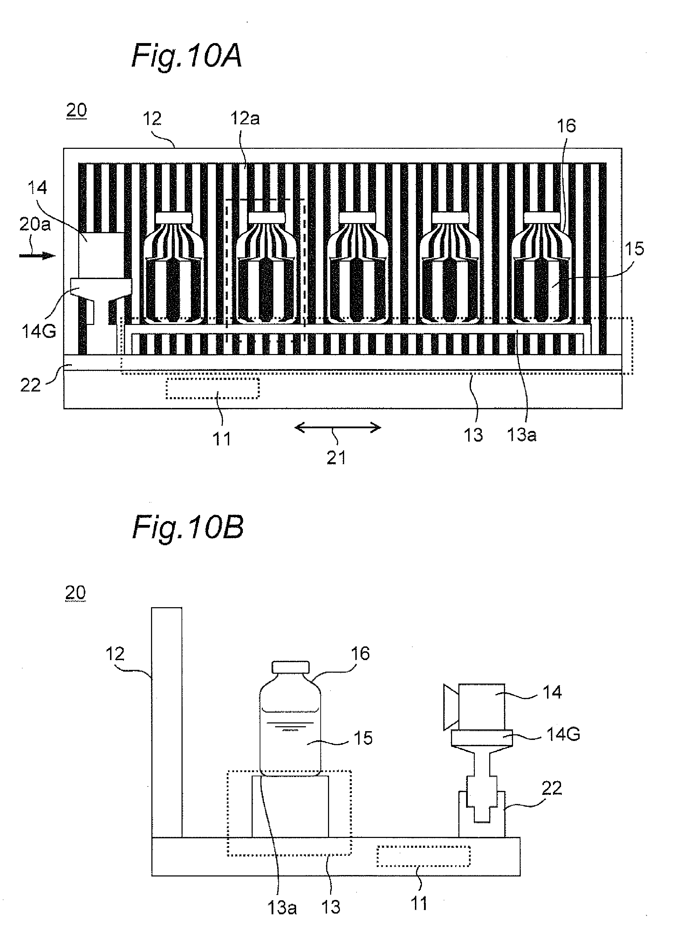

Fig. 10A and Fig. 10B are schematic configuration views of a liquid medicine identification apparatus 20 of another modification example according to the first embodiment of the present invention. Fig. 10A is a front view of the liquid medicine identification apparatus 20 of the another example. Fig. 10B is a side view of Fig. 10A when viewed from a direction of an arrow 20a.

The liquid medicine identification apparatus 20 shown in Fig. 10A and Fig. 10B is a liquid medicine identification apparatus of the another modification example, which has a configuration partially different from that of the liquid medicine identification apparatus 10 shown in Fig. 1A and Fig. 1B. This liquid medicine identification apparatus 20 includes: a pattern projection unit 12; a placing unit 13; an imaging camera 14; and an image processing unit 11.

The liquid medicine identification apparatus 20 shown in Fig. 10A and Fig. 10B is different from the liquid medicine identification apparatus 10 shown in Fig. 1A and Fig. 1B in that the pattern projection unit 12 has a transversely ling shape, and that a plurality of the medicine containers 16 are arranged on a transversely ling placing base 13a. The imaging camera 14 of the liquid medicine identification apparatus 20 can image light and dark patterns, which are projected onto the plurality of liquid medicine containers 16, as the imaged image information 19 in such a manner that a support member 214G that supports the imaging camera 14 reciprocates along a guide rail 22 in a direction of an arrow 21.

With this configuration, the liquid medicine quantity of the liquid medicine 15 can be determined more accurately, and in addition, the types or/and shapes of the plurality of liquid medicines 15 or/and the plurality of medicine containers 16 can be identified accurately and efficiently at a time.

Note that, in the case of using an imaging camera with a high resolution, it is also possible to collectively image the medicine containers 16 without moving the imaging camera 14.

### (Second embodiment)

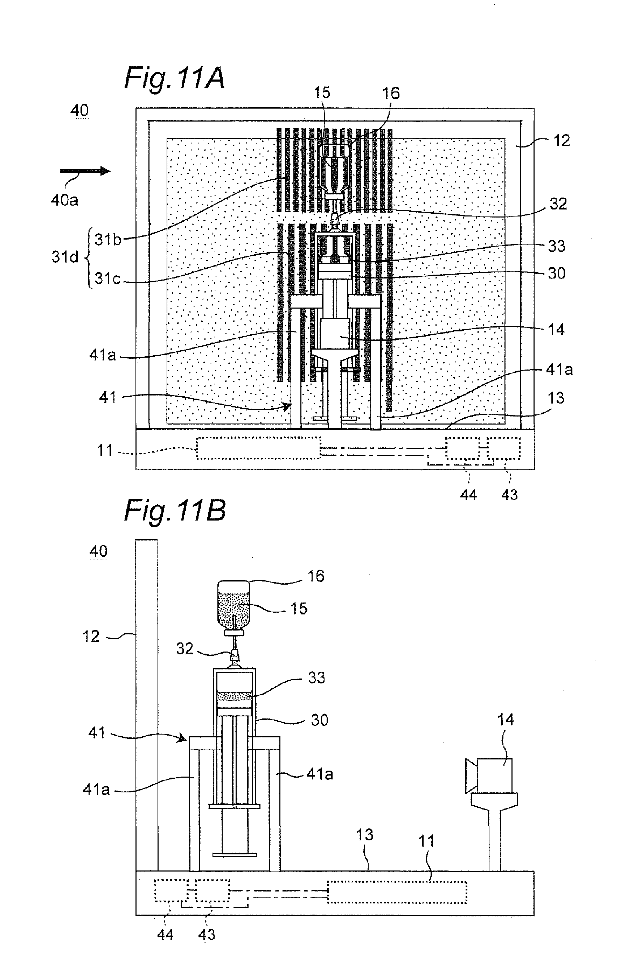

Fig. 11A and Fig. 11B are schematic configuration views of a liquid medicine identification apparatus 40 according to a second embodiment of the present invention. Fig. 11A is a front view of the liquid medicine identification apparatus 40. Fig. 11B is a side view of the liquid medicine identification apparatus 40 when viewed from a direction of an arrow 40a of Fig. 11A.

The liquid medicine identification apparatus 40 of this second embodiment, which is shown in Fig. 11A and Fig. 11B, has a configuration partially different from those of the liquid medicine identification apparatuses 10 and 20 of the above-mentioned first embodiment. This liquid medicine identification apparatus 40 includes: a pattern projection unit 12; a placing unit 13; an imaging camera 14; and an image processing unit 11. Unlike the first embodiment, a syringe 30 integrated with the medicine container 16 is supported by four support columns 41a of a syringe support unit 41 included in the placing unit 13.

The image processing unit 11 is configured in a similar way to that of Fig. 1B of the first embodiment, and includes: an image input unit 11a; an information input unit 11b; an image selection unit 11c; an image matching unit 11d; and a storage unit 11e.

Here, the image input unit 11a is connected to the imaging camera 14, and receives the imaged image information 19 imaged by the imaging camera 14. To the information input unit 11b, there is inputted information on a liquid medicine to be identified, which comes from the operator, that is, medicine information including information on at least the types of the liquid medicine 15 and the medicine container 16, and then the medicine information concerned is stored in the storage unit 11e. A database (DB) 17 is a database arranged in the liquid medicine identification apparatus 40, or a database that is arranged on an outside of the liquid medicine identification apparatus 40 and is connectable thereto through a communication line such as the Internet. From the information input unit 11b or the database 17, the image selection unit 11c selects and acquires reference image information 18, which is inputted thereto in advance and serves as a reference for the identification, based on the information on the liquid medicine to be identified, which comes from the operator using the liquid medicine identification apparatus. The image matching unit 11d compares the reference image information 18, which is acquired by the image selection unit 11c, and the imaged image information 19, which is inputted to the image input unit 11a, with each other.

Based on the above-mentioned information, the image matching unit 11d determines that the reference image information 18 and the imaged image information 19 are the same image information, thereby identifying the type or/and shape of the liquid medicine 15 or/and the medicine container 16.

With this configuration, the type of the liquid medicine 15 or/and the type or/and shape of the medicine container 16 can be identified accurately.

Note that, by the syringe support unit 41, in addition to the medicine container 16 in which the liquid medicine 15 is stored, the placing unit 13 holds the syringe 30, which inserts a needle 32 into the medicine container 16, in a state of integrating the syringe 30 with the medicine container 16. The pattern projection unit 12 projects light and dark patterns 31d onto the medicine container 16 and the syringe 30, which are set in the integrated state. Here, striped patterns 31b are for the medicine container 16, and striped patterns 31c are for the syringe 30.

With this configuration, even in such a case of sucking the liquid medicine 15 from the medicine container 16 into the syringe 30, the type or/and shape of the liquid medicine 15 or/and the medicine container 16 can be identified accurately.

Moreover, the image matching unit 11d shown in Fig. 1B uses the reference image information 18 and the imaged image information 19, which are in the integrated state, in order to determine that the reference image information 18 and imaged image information 19 of the medicine container 16 and the syringe 30 are the same image information. A configuration may also be adopted, in which, in addition to this determination, it is determined that the reference image information 18 and imaged image information 19 of the medicine container 16 and the reference image information 18 and imaged image information 19 of the syringe 30 are individually the same image information.

With this configuration, not only the type or/and shape of the liquid medicine 15 or/and the medicine container 16 can be identified accurately, but also it can be determined that the liquid medicine 15 of the medicine container 16 is surely sucked into the syringe 30. Note that the fact that the liquid medicine 15 of the medicine container 16 is surely sucked into the syringe 30 is determined from the respective changes of the liquid medicine quantities in the insides of the medicine container 16 and the syringe 30.

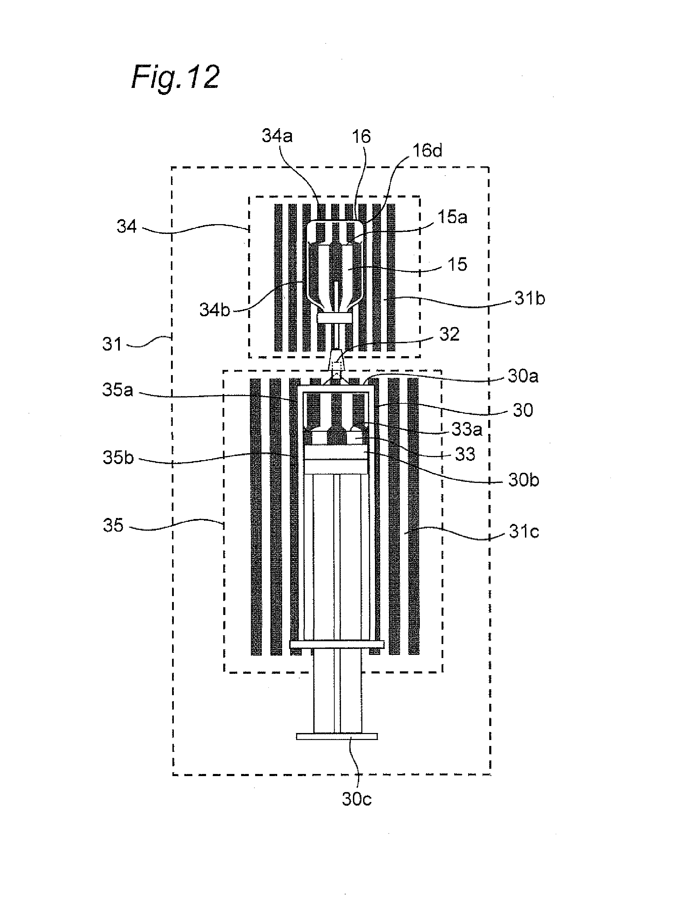

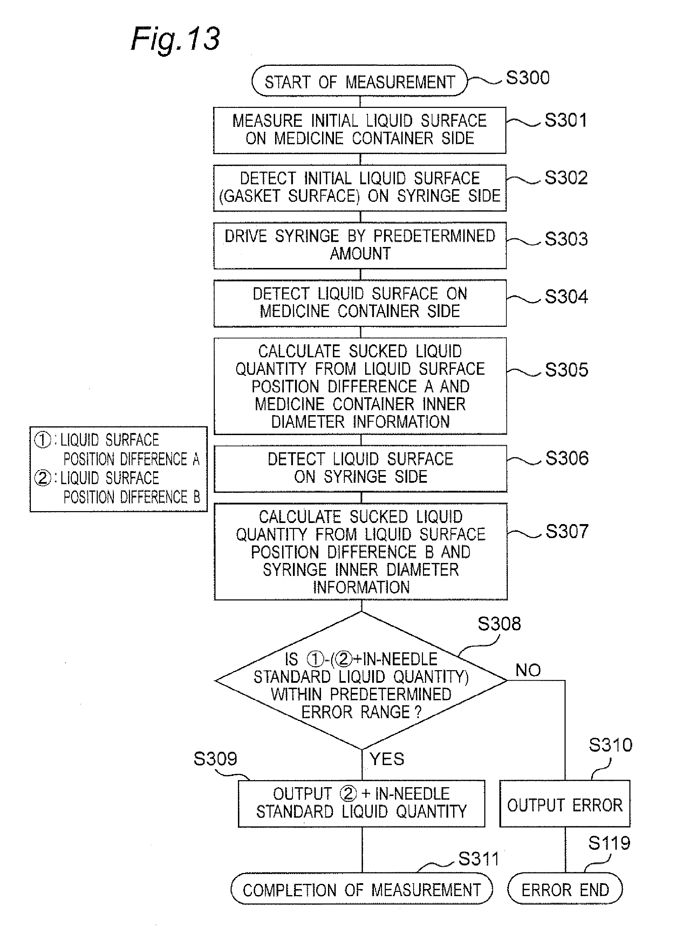

Fig. 12 is a view showing an example of imaged image information 31 of the syringe 30 and the medicine container 16 in a state of sucking the liquid medicine 15 by the liquid medicine identification apparatus 40 of this second embodiment. Fig. 13 shows an example of a flowchart at the time of individually projecting striped patterns 31b and 31c onto the syringe 30 integrated with the medicine container 16 while interposing the needle 32 of the syringe 30 therebetween, and then detecting a liquid surface 33a of a liquid medicine 33 in the syringe 30, and the like.

As shown in Fig. 12, in medicine container image information 34 in the imaged image information 31, the striped patterns 31b projected toward the medicine container 16, light and dark patterns 34a transmitted through the medicine container 16, and light and dark patterns 34b transmitted through the liquid medicine 15 are imaged as different patterns. It is understood that, as shown in Fig. 12, the patterns are changed complicatedly in boundary regions among these patterns. Such regions where the patterns are changed complicatedly as described above are detected, whereby a position of the liquid surface 15a or/and the bottom portion 16d (bottom surface 16e) can be detected.

In a similar way, in syringe image information 35 of the imaged image information 31, striped patterns 31c projected toward the syringe 30, light and dark patterns 35a transmitted through the syringe 30, and light and dark patterns 35b transmitted through the liquid medicine 33 are imaged as different patterns. It is understood that, as shown in Fig. 12, the patterns are changed complicatedly in boundary regions among these patterns. Such regions where the patterns are changed complicatedly as described above are detected, whereby a position of the liquid surface 33a or/and a tip end portion 30a of the syringe 30 can be detected.

Next, by using Fig. 13, a description is made of an operation flow of measuring a liquid medicine quantity of the liquid medicine 33 to be sucked into the syringe 30.

First, such measurement is started (Step S300). Then, the striped patterns 31b are projected from behind the medicine container 16, and an initial liquid surface 15a in the medicine container 16 is detected based on a position where the patterns are largely changed, whereby an initial liquid medicine quantity in the medicine container 16 (for example, a vial) is measured by the liquid medicine identification apparatus 40 (Step S301).

Subsequently, in a similar way, the striped patterns 31c are projected onto the syringe 30 from behind the syringe 30, and an initial liquid surface 33a in the syringe 30 is detected by the liquid medicine identification apparatus 40 based on a position where the patterns are largely changed (Step S302). In the case where the liquid medicine 33 is not sucked into the syringe 30, a position of a gasket surface 30b is detected.

Subsequently, in order to suck the liquid medicine 33 from the inside of the medicine container 16 by the syringe 30, a plunger 30c of the syringe 30 is moved by a predetermined amount, and the syringe 30 is driven (Step S303).

Subsequently, the liquid surface 15a in the medicine container 16 at this time is detected by the image matching unit 11d (Step S304), and a liquid surface position difference A thereof from the liquid surface 15a in the medicine container 16 in the initial state is calculated by the image matching unit 11d.

Subsequently, a sucked liquid quantity SA is calculated by an arithmetic operation unit 43 from this liquid surface position difference A from the image matching unit 11d and from inner diameter information of the medicine container 16, which is inputted from the database 17 or the information input unit 11b through the image selection unit 11c (Step S305). To the arithmetic operation unit 43, there are inputted pieces of output information coming from the image matching unit 11d and output information coming from the image selection unit 11c.

Moreover, the liquid surface 33a of the syringe 30 at this time is detected by the image matching unit 11d (Step S306), and a liquid surface position difference B thereof from the liquid surface 33a of the syringe 30 in the initial state is calculated by the image matching unit 11d. A sucked liquid quantity SB is calculated by the arithmetic operation unit 43 from this liquid surface position difference B from the image matching unit 11d and from inner diameter information of the syringe 30, which is inputted from the database 17 or the information input unit 11b through the image selection unit 11c (Step S307).

Subsequently, in Step S308, by a liquid quantity determination unit 44 of the liquid medicine identification apparatus 40, it is determined whether or not the liquid medicine quantity of the liquid medicine sucked from the medicine container 16 and the liquid medicine quantity of the liquid medicine sucked into the syringe 30 are equal to each other within a predetermined error range. That is to say, by the liquid quantity determination unit 44, it is determined whether or not a difference between the sucked liquid quantity SA and the sucked liquid quantity SB, which are individually calculated by the arithmetic operation unit 43, and an in-needle standard liquid quantity inputted from the database 17 or the information input unit 11b through the image selection unit 11c is within a predetermined error range (Step S308). Hence, to the liquid quantity determination unit 44, there are inputted output information coming from the arithmetic operation unit 43 and output information coming from the image selection unit 11c. If it is determined by the liquid quantity determination unit 44 that the difference between the sucked liquid quantity SA and the sucked liquid quantity SB and the in-needle standard liquid quantity is within the predetermined error range, then the operations proceed to Step S309, where a liquid quantity obtained by adding the in-needle standard liquid quantity to the sucked liquid quantity SB is outputted from the liquid quantity determination unit 44 of the liquid medicine identification apparatus 40, and then the measurement is ended (Step S311).

Meanwhile, in Step S308, if it is determined by the liquid quantity determination unit 44 that the difference between the sucked liquid quantity SA and the sucked liquid quantity SB, and the in-needle standard liquid quantity is out of the predetermined error range, then the operations proceed to Step S310, where error output is performed from the liquid medicine identification apparatus 40 (Step S310), and thereafter, the operations are ended as an error (Step S119).

With the configuration and the method, which are as described above, in the syringe 30 integrated with the medicine container 16 while interposing the needle 32 therebetween, the quantity of the liquid medicine sucked from the medicine container 16 and the quantity of the liquid medicine sucked into the syringe 30 can be measured accurately.

Note that, in the case of also determining a color of the liquid medicine 15 or the medicine container 16 in the above-mentioned first embodiment, for example, in Step S103 of Fig. 4, a pattern is used, in which a left half of the light and dark patterns 12a of the pattern projection unit 12 is striped patterns of two colors in a relationship of similar colors to each other, and a right half of the light and dark patterns 12a is striped patterns of two colors in a relationship of complementary colors to each other. Here, depending on conditions, the light and dark patterns which are the striped patterns of the two colors in the relationship of the similar colors to each other and the light and dark patterns which are the striped patterns of the two colors in the relationship of the complementary colors to each other may be configured to be switched. In the striped patterns of the two colors in the relationship of the similar colors to each other, an evaluation value thereof becomes lower than an evaluation value serving as a reference in which the light and dark patterns 12a are striped patterns of two white and black colors. Moreover, in the striped patterns of the two colors in the relationship of the complementary colors to each other, an evaluation value thereof becomes higher than the evaluation value serving as the reference. In this case, it is important that at least one to two stripes can be detected on each of right and left sides. By using such patterns as described above, in Step S105B of Fig. 4, a color of the shoulder portion 16c of the medicine container 16, that is, a color of the medicine container 16 can be determined. Moreover, by using such patterns as described above, in Step S106B, a color of a peripheral portion of the bottom portion 16c of the medicine container 16, that is, both of the color of the medicine container 16 and a color of the liquid medicine 15 can be determined. Furthermore, by using such patterns as described above, in Step S109, a color of a peripheral portion of the liquid surface 15a, that is, both of the color of the medicine container 16 and the color of the liquid medicine 15 can be determined. The way how the color looks differs depending on whether the color concerned is similar or complementary to the color of the medicine container 16. Accordingly, the determinations of the color of the medicine container 16 and of the color of the liquid medicine 15 are effective for determining the types, quantities, and the like of the medicine container 16 and the liquid medicine 15.

Note that the stripes are not limited to longitudinal ones, may be oblique ones, and may be any as long as they are not parallel to the liquid surface 15a. This is because it is difficult to detect the liquid surface 15a by using stripes parallel to the liquid surface 15a.

Note that the image is not limited to a lateral image, and may be a longitudinal image. For example, a range of from the shoulder portion 16c to the bottom portion 16d may be included in a single longitudinal image.

Note that, from a viewpoint of clearly imaging the shoulder portion 16c, preferably, the medicine container 16 is imaged at least downward from above the same, or imaged at least from a transverse direction thereof. As an example, from the viewpoint of clearly imaging the shoulder portion 16c, preferably, the medicine container 16 is imaged at a position where a height of an optical axis (center axis) of the imaging camera 14 and a height of an upper surface or lower surface of the cap 16a of the medicine container 16 are allowed to substantially coincide with each other. In this case, desirably, the medicine container 16 is placed on an elevator base capable of being elevated by an elevator device 13g (refer to Fig. 5B) as the placing unit 13.

Note that arbitrary embodiments or modification examples among the variety of embodiments or modification examples are combined appropriately, whereby effects individually inherent therein can be exerted.

### INDUSTRIAL APPLICABILITY

In accordance with the liquid medicine identification apparatus and liquid medicine identification method of the present invention, the type or/and shape of the liquid medicine or/and the medicine container can be identified accurately, whereby, in a hospital and the like, a workload on a nurse, a pharmacist, or the like can be reduced to a large extent, in addition, mistakes in the operation, and the like can be prevented, and the liquid medicine identification apparatus and liquid medicine identification method of the present invention are useful.

Moreover, the liquid medicine identification apparatus and liquid medicine identification method of the present invention can be applied not only to the medical field such as the hospital but also an industrial field (agriculture, industry, or the like) using biochemical, and the like, and are useful.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A liquid medicine identification apparatus comprising:
a pattern projection unit that projects light and dark patterns;
a placing unit that places thereon a medicine container containing a liquid medicine in an inside thereof and having transparency;
an imaging camera that images, as imaged image information, the light and dark patterns having transmitted through the medicine container; and
an image processing unit that acquires, from a database, reference image information serving as a reference for identification, compares the reference image information and the imaged image information with each other, and identifies a type of the liquid medicine or the medicine container.

2. The liquid medicine identification apparatus according to claim 1,
wherein at least a shoulder portion of the medicine container is imaged by the imaging camera, and the imaged image information is acquired.

3. The liquid medicine identification apparatus according to claim 1 or 2,
wherein each of the reference image information and the imaged image information is information including image information imaged by transmitting light only through the medicine container and image information imaged by transmitting light through the medicine container and the liquid medicine.

4. The liquid medicine identification apparatus according to claim 1 or 2,
wherein each of the reference image information and the imaged image information is image information including a liquid surface of the liquid medicine and upper and lower portions of the liquid surface.

5. The liquid medicine identification apparatus according to claim 4,
wherein a part of the placing unit adjacent to a bottom portion of the medicine container is a transparent member or a hollow, and
each of the reference image information and the imaged image information is image information including the bottom portion of the medicine container and upper and lower portions of the bottom portion.

6. The liquid medicine identification apparatus according to claim 1 or 2,
wherein, on the placing unit, in addition to the medicine container filled with the liquid medicine, a syringe that inserts a needle into the medicine container is placed in a state of being integrated with the medicine container, and
the pattern projection unit projects the light and dark patterns onto the medicine container and the syringe in the state of being integrated with each other.

7. The liquid medicine identification apparatus according to claim 1 or 2,
wherein the light and dark patterns are two-color striped patterns along a direction intersecting a horizontal direction.

8. The liquid medicine identification apparatus according to claim 7,
wherein colors of the two-color striped patterns are in a relationship of similar colors to each other.

9. The liquid medicine identification apparatus according to claim 7,
wherein colors of the two-color striped patterns are in a relationship of complementary colors to each other.

10. A liquid medicine identification method comprising:
placing, on a placing unit, a medicine container containing a liquid medicine as an identification target therein and having transparency;
acquiring, from a database, reference image information serving as a reference for identification;
projecting light and dark patterns from behind the medicine container placed on the placing unit, the light and dark patterns being decided based on the reference image information;
imaging the light and dark patterns as imaged image information by transmitting the light and dark patterns through the medicine container and observing the resultants and
comparing the reference image information and the imaged image information with each other, and identifying a type of the liquid medicine or the medicine container.

11. The liquid medicine identification method according to claim 10,
wherein the imaged image information is image information including a shoulder portion of the medicine container.

12. The liquid medicine identification method according to claim 10 or 11,
wherein each of the reference image information and the imaged image information is image information including a liquid surface of the liquid medicine and upper and lower portions of the liquid surface.

13. The liquid medicine identification method according to claim 10 or 11,
wherein each of the reference image information and the imaged image information is information including image information imaged by transmitting light only through the medicine container and image information imaged by transmitting light through the medicine container and the liquid medicine.

14. The liquid medicine identification method according to claim 12,
wherein a part of the placing unit adjacent to a bottom portion of the medicine container is a transparent member or a hollow, and
each of the reference image information and the imaged image information is image information including the bottom portion of the medicine container and upper and lower portions of the bottom portion.

15. The liquid medicine identification method according to claim 10 or 12,
wherein the light and dark patterns are two-color striped patterns along a direction intersecting a horizontal direction.

16. The liquid medicine identification method according to claim 15,
wherein colors of the two-color striped patterns are in a relationship of complementary colors to each other.

17. The liquid medicine identification method according to claim 15,
wherein colors of the two-color striped patterns are in a relationship of complementary colors to each other.
